Europäisches Patentamt

European Patent Office

Office européen des brevets

(11) Publication number: **0 040 588**

**A1**

## (12) EUROPEAN PATENT APPLICATION

(21) Application number: **81830077.4**

(22) Date of filing: **15.05.81**

(51) Int. Cl.³: **B 60 J 1/17**
B 60 R 13/06, B 60 J 5/04

(30) Priority: **15.05.80 IT 6776380**

(43) Date of publication of application:
**25.11.81 Bulletin 81/47**

(84) Designated Contracting States:
**DE FR GB IT SE**

(71) Applicant: **S.I.R.P. STUDI INDUSTRIALI
REALIZZAZIONE PROTOTIPI S.p.A.
Via A.Grandi 11
I-10024 Moncalieri (Torino)(IT)**

(72) Inventor: **Mantovani, Aldo
Strada Val Pattonera 163/26
I-10133 Torino(IT)**

(74) Representative: **Jacobacci, Filippo et al,
c/o JACOBACCI-CASETTA & PERANI S.n.c. Via Alfieri, 17
I-10121 Torino(IT)**

(54) Structure for supporting and guiding vertically-movable panes in side windows of motorvehicle bodies.

(57) A structure for supporting and guiding vertically-movable panes in side windows of motorvehicle bodies, comprises a support frame (6) including two half shells (7, 8) secured to each other, each half shell being formed by a single piece of pressed sheet metal. Two gaskets (9, 10) for guiding the pane and secured to the support frame (6). The structure further comprises two intermediate support members (12) secured respectively along the frong edge and the rear edge of the pane, and each having a longitudinal portion (13) assembled within the corresponding guide gasket of the pane and arranged in a plane displaced towards the interior of the body, relative to the general plane of the pane, by an amount such that the outer surface of the pane is flush with the outer surface of the body.

FIG. 2

EP 0 040 588 A1

Croydon Printing Company Ltd

- 1 -

"Structure for supporting and guiding vertically-movable panes in side windows of motorvehicle bodies".

The present invention relates to a structure for supporting and guiding vertically-movable panes in the side windows of motorvehicle bodies, of the type comprising a support frame including two vertical posts each provided with a gasket for guiding the front edge and the rear edge of the pane, respectively, and a cross piece which connects the tops of the two vertical posts, so as to define the aperture of the window.

According to the prior art, the support frame is comprised of an element separate from the motorvehicle body.

Further, the front edge and the rear edge of the pane of the motorvehicle window are assembled directly within the guide gaskets, so that the outer surface of the pane lies in a plane which is displaced towards the interior of the body relative to the outer surface of both parts of the body which are adjacent the vertical edges and the upper edge of the window.

These known solutions have the drawback that, on one hand, they require a relatively high number of parts, which make manufacture and assembling more difficult, and, on the other hand, they give rise to a certain noise when the motorvehicle is running, due to the recessed position of the window pane.

The object of the present invention is to provide a supporting and guiding structure of the type specified above which is simple and unexpensive to manufacture and which at the same time makes it possible to keep the outer surface of the window pane flush with the outer surface of that part of the body adjacent the front edge, the rear edge and the upper edge of the window.

In order to achieve this object, the present invention provides a support structure of the aforesaid type, characterised in that the structure is comprised of two half shells , each formed by a single piece of pressed sheet metal, said two half shells being coupled and fixed to each other so as to define a lower panel of the motorvehicle body and the said support frame above such lower panel, in that the structure further comprises two intermediate support members secured respectively along the front edge and the rear edge of the pane and each having a portion assembled within the corresponding guide gasket of the pane, and in that the said portion of each intermediate support member which is assembled within the guide gasket of the pane is arranged in a plane which is displaced towards the interior of the body relative to the general plane of the pane by an amount such that the outer surface of

- 3 -

the pane is flush with the outer surface of the body.

Owing to this feature, the advantage to greatly simplify the manufacture of the support structure is achieved, and at the same time the aerodynamic characteristics of the motorvehicle are improved and the noise during running is reduced.

The invention will now be described with reference to the accompanying drawings, which are supplied purely by way of non-limitative example, in which:

Figure 1 is a perspective view of a motorvehicle door provided with a support structure according to the present invention,

Figures 2 to 4 are sections taking along the lines II-II, III-III and IV-IV of Figure 1, and

Figure 5 is a diagrammatic view of the door of Figure 1 in a disassembled condition.

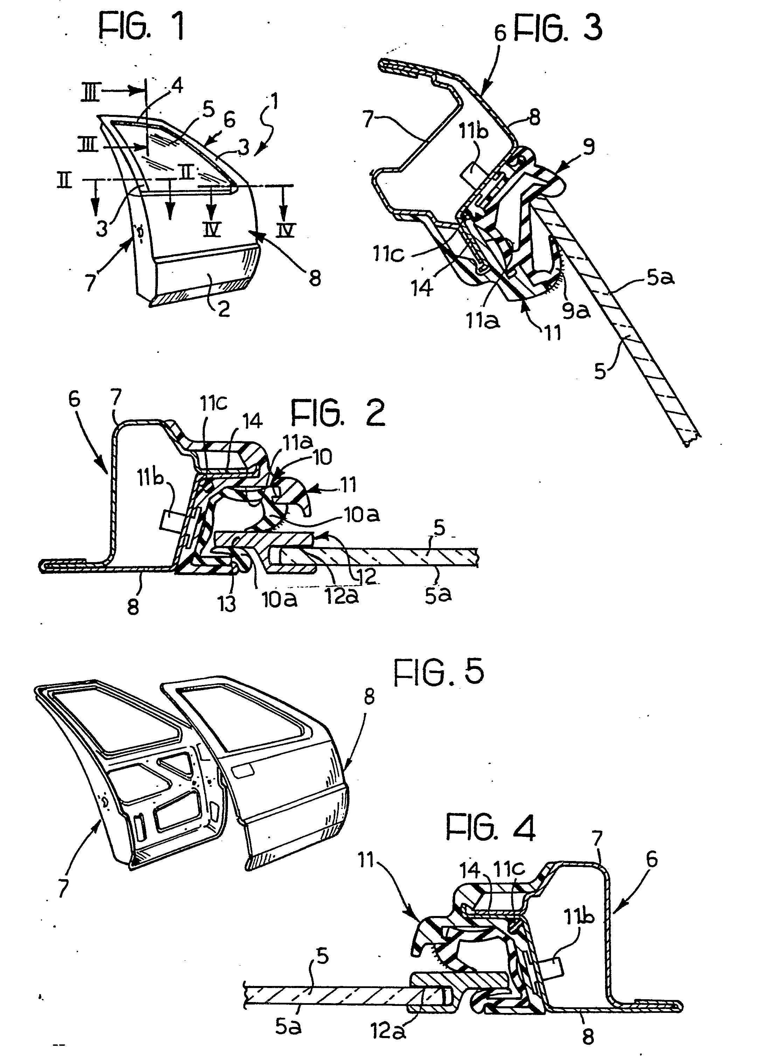

In Figure 1 a motorvehicle door is generally indicated 1 and comprises a lower panel 2, two upper posts 3 and a cross piece 4 which connects the tops of the two posts 3. The upper edge of the lower panel 2, the posts 3 and the cross piece 4 define the aperture of the window associated with the door.

- 4 -

The window of the door 1 comprises a pane 5 which is movable vertically between a raised position, shown in Figure 1, and a lowered position retracted within the structure of the lower panel 2.

According to the invention, the structure of the door 1 is comprised of a shell of sheet metal including an inner half shell 7 and an outer half shell 8, each formed by a single piece of pressed sheet metal (Figure 5). The two half shells 7, 8 are coupled and secured to each other, for instance by welding, so as to define the lower panel 2, and, above the latter, a support frame 6 of which the posts 3 and the cross piece 4 form part.

In correspondence with the two posts 3 (see Figures 2 to 4) there is secured a channel-shaped guide gasket 10. The gasket 10 is made of plastics material and has two flexible wing pieces 10a with flocked active surfaces, that is, surfaces provided with glued-on nylon fibres, to reduce friction with the member intended to slide inside the guide.

The guide gasket 10 is arranged within a channel-shaped cavity 11a made in a member 11 of plastics material. As well as supporting the gasket 10, this member, which is secured to the outer half shell 8 of the sheet metal frame 6 by means of clips 11b, also serves as a partial covering for the inner half shell 7. The use of a single member to fulfil the two functions does, in fact, enable a considerable saving.

Between the member 11 and the outer half shell 8 there is also arranged a gasket of soft rubber 11c for sealing against the ingress of water.

To the front edge and the rear edge of the pane 5, there are secured two intermediate support members 12, each of which has a longitudinal portion 13 sliding within the corresponding guide gasket 10.

Each member 12 is secured to the corresponding edge of the pane 5. The longitudinal portion 13 of each element 12 forms a wing piece arranged in a plane which is displaced towards the interior of the body with respect to the general plane of the pane 5, and extends throughout the whole height of the latter. The amount of displacement between the portion 13 sliding within the gasket 10 and the portion of each member 12 stuck to the pane 5 is such that it is possible to keep the outer surface 5a of the pane 5 substantially flush with the outer surface of that part of the body adjacent the upper edge, the front edge and the rear edge of the pane 5.

In the example illustrated, the member 12 is of black anodised aluminium and has an edge with a fork-shaped cross-section which is secured to the pane by a coating of glue 12a.

The two half shells 7, 8 which form the support frame 6 of the door 1 are provided with respective flat edges adjoining to each other which define, along the sides and along the upper edge of the aperture of the window 5, a tongue 14 to which is fixed the member 11 of plastics material. Further, the portion of this element 11 of plastics material along the cross piece 4 supports a gasket 9 of rubber also having a flocked portion 9a for contact with the upper edge of the pane 5. Further, in this case also, the member 11 is secured to the outer half shell 8 by clips 11b with the interposition of a sealing gasket 11c.

It will be clear from the foregoing description that the support structure according to the invention, comprised of two simple half shells of pressed sheet metal, makes it possible to achieve great advantages from the stand point of manufacture and assembling operations with respect to the conventional structures, in which the support frame of the pane is formed by a separate piece connected to the motorvehicle body. Further, by using a support structure according to the present invention, it is possible to provide motorvehicles in which the external surfaces of the vertically-movable panes of the side windows are flush with the outer surfaces of the portions of the body adjacent the front edges, the rear edges and the upper edges of the panes. This makes it possible to achieve particular advantages both from the aesthetic point of view and from the point of view of the aerodymamic characteristics of the motorvehicle, as well as from the stand point of noise. Furthermore, since the guide gasket is anchored to a single tongue formed by the two half shells 7, 8, rather than between two parallel tongues as in the known solutions, the structure according to the invention is particularly simple to construct.

The use of a single member of plastics material 11 to fulfil the functions indicated above makes it possible to further reduce the manufacturing costs.

Naturally, without prejudice to the principle of the invention, the details of construction and forms of embodiment may vary extensively from what has been described and illustrated purely by way of example, without thereby moving beyond the scope of the present invention.

For example, the member 11 could be of aluminium or of ferrous material rather than plastics material.

CLAIMS

1.    Structure for supporting and guiding vertically-movable panes in side windows of motorvehicle bodies, comprising a support frame (6) including two vertical posts (3) each provided with a gasket for guiding the front edge and the rear edge of the pane, respectively, and a cross piece (4) which connects the tops of the two vertical posts (3), so as to define the aperture of the window, characterised in that said structure is comprised of two half shells (7, 8) each formed by a single piece of pressed sheet metal and coupled and secured to each other so as to define a lower panel (2) of the motorvehicle body and, above such lower panel (2), said support frame (6), in that the support structure further comprises two intermediate support members (12) secured to the front edge and the rear edge, respectively, of the pane (5) and each having a longitudinal portion (13) assembled within the corresponding guide gasket (10) of the pane, and in that the said longitudinal portion (13) of each intermediate support member (12), which is assembled within the guide gasket (10) of the pane, is arranged in a plane displaced towards the interior of the body with respect to the general plane of the pane (5) by an amount such that the outer surface of the pane (5) is flush with the outer surface of the parts of the body adjacent the front edge, the rear edge and the upper edge of the pane.

2.    Supporting and guiding structure according to claim 1, characterised in that each intermediate support member (12) comprises a wing piece (13) projecting from the edge of the pane and assembled within the corresponding guide gasket (10).

3.    Supporting and guiding structure according to claim 2, characterised in that the intermediate support member (12) is glued to a peripheral portion of the pane (5).

4.    Supporting and guiding structure according to claim 1, characterised in that each guide gasket (10) is assembled within a channel-shaped cavity (11a) made in an auxiliary member (11) which is secured to the support frame (6).

5.    Supporting and guiding structure according to claim 4, characterised in that the auxiliary member (11) is secured by clips to the support frame (6).

6.    Supporting and guiding structure according to claim 5, characterised in that between the guide gasket (10) and the auxiliary member (11) there is interposed a sealing gasket.

7.    Supporting and guiding structure according to claim 6, characterised in that the auxiliary member at least partially covers the inner surface of the support frame.

– 10 –

8. Supporting and guiding structure according to claim 4, characterised in that the auxiliary member is of plastics material.

9. Supporting and guiding structure according to claim 4, characterised in that the auxiliary member is of aliminium.

10. Supporting and guiding structure according to claim 4, characterised in that the auxiliary member is of ferrous material.

1/1

FIG. 1

FIG. 3

FIG. 2

FIG. 5

FIG. 4

**European Patent Office**

**EUROPEAN SEARCH REPORT**

EP 81 83 0077

| | DOCUMENTS CONSIDERED TO BE RELEVANT | | CLASSIFICATION OF THE APPLICATION (Int Cl.³) |
|---|---|---|---|
| Category | Citation of document with indication, where appropriate, of relevant passages | Relevant to claim | |
| X | FR - A - 2 279 581 (GENERAL MOTORS)<br>* Page 4, line 32 - page 5, line 18; figures 3-5 * | 1,2,3 | B 60 J 1/17<br>B 60 R 13/06<br>B 60 J 5/04 |
| X | FR - A - 2 419 190 (AUDI NSU)<br>* Page 4, line 23 - page 5, line 21; figures 2a, 2b * | 1,2,3 | |
| X | FR - A - 2 231 533 (CHRYSLER FRANCE)<br>* Page 1, line 1 - page 4, line 8; figures 1-6 * | 1 | TECHNICAL FIELDS SEARCHED (Int. Cl.³)<br><br>B 60 R 13/-<br>B 60 J 1/-<br>5/- |
| A | GB - A - 701 421 (THE BUDD COM-PANY)<br>* Page 1, lines 47-93; figures 1,2 * | 1 | |
| A | DE - A - 2 827 372 (AUDI NSU)<br>* Page 9, lines 8-23; figure 2 * | 1 | |
| A | DE - B - 1 202 657 (DAIMLER BENZ)<br>* Column 3, line 26 - column 4, line 3; figure 3 * | 1 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | US - A - 2 024 773 (LOHRMAN)<br>* Page 1, left-hand column, line 41 - right-hand column, line 30; figures 2-7 * | 1,2 | |

./.

&. member of the same patent family.
corresponding document

The present search report has been drawn up for all claims

| Place of search | Date of completion of the search | Examiner |
|---|---|---|
| The Hague | 24-08-1981 | AYITER |

EPO Form 1503.1 06.78

European Patent Office

**EUROPEAN SEARCH REPORT**

| Category | Citation of document with indication, where appropriate, of relevant passages | Relevant to claim |
|---|---|---|
| A | GB - A - 746 138 (RAWLINGS)<br>* Page 2, lines 55-64; figures 6,7 *<br>-- | 1 |
| A | US - A - 2 211 257 (DEISLEY)<br>* Page 1, left-hand column, line 53 - right-hand column, line 24; figures 4,5 *<br>-- | 1 |
| A | US - A - 2 791 464 (RENNO)<br>* Column 5, line 47 - column 6, line 35; figures 9-11 *<br>-- | 1 |
| A | US - A - 1 696 588 (BAILEY)<br>* Page 2, lines 1-87; figures 1-9 *<br>-- | 1 |
| A | US - A - 1 757 639 (KUTZNER)<br>* Page 2, lines 24-77; figures 3-9 *<br>-- | 1 |
| A | FR - A - 813 525 (MAIER)<br>* Page 3, lines 49-71; figures 10,11 *<br>-- | 1 |
| A | FR - A - 1 327 861 (PANHARD-LEVASSOR)<br>./. | 1,7 |

**DOCUMENTS CONSIDERED TO BE RELEVANT**

CLASSIFICATION OF THE APPLICATION (Int. Cl.³)

TECHNICAL FIELDS SEARCHED (Int. Cl.³)

EPO Form 1503.2 06.78

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | \* Page 2, left-hand column, line 10 - right-hand column, line 35; figure 2 \* | | |

TECHNICAL FIELDS SEARCHED (Int. Cl.³)

European Patent Office

EPO Form 1503.2  06.78